**Europäisches Patentamt**

**European Patent Office**

**Office européen des brevets**

(11) Veröffentlichungsnummer : **0 185 799**
**B1**

(12) **EUROPÄISCHE PATENTSCHRIFT**

(45) Veröffentlichungstag der Patentschrift :
**15.03.89**

(21) Anmeldenummer : **84116442.9**

(22) Anmeldetag : **28.12.84**

(51) Int. Cl.⁴ : **B 62 M  9/08**, F 16 H  9/10,
F 16 H  55/54

(54) Automatisches Getriebe.

(43) Veröffentlichungstag der Anmeldung :
**02.07.86 Patentblatt 86/27**

(45) Bekanntmachung des Hinweises auf die Patenterteilung : **15.03.89 Patentblatt 89/11**

(84) Benannte Vertragsstaaten :
**AT BE CH DE FR GB IT LI LU NL SE**

(56) Entgegenhaltungen :
**EP--A-- 0 084 160**
**WO--A--79 /005 22**
**WO--A--83 /014 24**
**US--A-- 3 850 045**
**US--A-- 4 068 539**

(73) Patentinhaber : **DÜRKOPP SYSTEM TECHNIK GMBH**
**August-Bebel-Strasse 133-135**
**D-4800 Bielefeld 1 (DE)**

(72) Erfinder : **Die Erfinder haben auf ihre Nennung**
**verzichtet**

(74) Vertreter : **Patentanwälte TER MEER - MÜLLER -**
**STEINMEISTER**
**Mauerkircherstrasse 45**
**D-8000 München 80 (DE)**

Jouve, 18, rue St-Denis, 75001 Paris, France

## Beschreibung

Die Erfindung betrifft eine Antriebsvorrichtung mit stufenloser Drehmomentverstellung, mit einer in einer Lagereinrichtung drehbar gelagerten Antriebswelle, zwei koaxial zur Antriebswelle angeordneten Stellscheiben, von denen eine mit der Antriebswelle antriebsverbunden ist und deren erste eine wenigstens teilweise um das Zentrum herum verlaufende spiralförmige Ausnehmung aufweist, während die zweite Stellscheibe vom Zentrum ausgehende, radiale Durchgangsschlitze aufweist, einem koaxial zur Antriebswelle angeordneten, aus einzelnen Segmenten bestehenden Segmentring, auf dessen Umfang ein Endlos-Antriebselement auflegbar ist, welche Segmente Ansätze besitzen, die sowohl in die spiralförmige Ausnehmung der ersten Stellscheibe als auch in die radialen Durchgangsschlitze der zweiten Stellscheibe eingreifen, sowie einer Blockiereinrichtung zur Blockierung der nicht mit der Antriebswelle antriebsverbundenen Stellscheibe.

Eine derartige Antriebsvorrichtung ist aus der US-A-3 850 045 bekannt. Bei der bekannten Vorrichtung sind drei Scheiben vorgesehen, die als Stellscheiben bezeichnet werden können. Zwei dieser Scheiben besitzen gegenläufige Spiralgänge, während die dritte Scheibe mit radialen Schlitzen versehen ist. In den radialen Schlitzen werden Zapfen geführt, auf denen Ritzel befestigt sind, die eine Antriebskette aufnehmen. Die Zapfen treten zugleich in die Spiralgänge der beiden anderen Stellscheiben ein. Die mit Spiralgängen versehenen Stellscheiben können alternativ durch eine Blockiereinrichtung blockiert werden. Bei relativer Verdrehung der beiden mit Spiralgängen versehenen Stellscheiben wandern die Zapfen der Ritzel in den radialen Schlitzen der dritten Stellscheibe nach außen bzw. innen. Dadurch ändert sich das Übersetzungsverhältnis.

Der Erfindung liegt die Aufgabe zugrunde, eine Antriebsvorrichtung mit stufenloser Drehmomentverstellung zu schaffen, die einfach und robust im Aufbau ist und einen sicheren Betrieb gewährleistet.

Diese Aufgabe wird erfindungsgemäß dadurch gelöst, daß eine der Stellscheiben an ihrem äußeren Umfangsbereich und an der der anderen Stellscheibe zugewandten Seite ein Ritzel trägt, das um eine parallel zur Antriebswelle verlaufende Achse frei drehbar ist, daß das Ritzel mit einem an der anderen Stellscheibe angebrachten ersten Zahnkranz kämmt, daß ein Außenring vorgesehen ist, der an seinem inneren Umfang einen zweiten Zahnkranz trägt, mit dem das Ritzel ebenfalls kämmt, und daß der Außenring relativ zur Antriebswelle nur dann durch die Blockiereinrichtung blockierbar ist, wenn sich die blockierbare Stellscheibe im unblockierten Zustand befindet.

Durch diese Maßnahmen wird erreicht, daß bei einer gewünschten Drehmomentveränderung der Durchmesser des Segmentringes in Folge der Relativbewegung zwischen der ersten und der zweiten Stellscheibe vergrößert oder verkleinert werden kann. Hierzu ist beispielsweise die zweite Stellscheibe, die die radialen Schlitze besitzt, fest mit der Antriebswelle verbunden, während die die spiralförmige Ausnehmung aufweisende erste Stellscheibe zur Veränderung des Drehmomentes blockierbar ist. Je nach Drehrichtung der zweiten Stellscheibe wird dann der Durchmesser des Segmentringes vergrößert oder verkleinert. Die Kraftübertragung auf eine anzutreibende Maschinenachse bzw. Radachse erfolgt über ein Endlos-Antriebselement, das auf dem Umfang des Segmentringes liegt und ein auf der Maschinen- bzw. Radachse geeignetes Antriebselement umgreift. Ein an der Antriebswelle der Antriebsvorrichtung angreifendes Drehmoment läßt sich somit stufenlos verstellen und auf das Antriebselement der Maschinen- bzw. Radachse übertragen. Das auf der Maschinen- bzw. Radachse sitzende Antriebselement kann dabei ebenfalls ein Segmentring sein, dessen Durchmesser mittels zweier Stellscheiben, wie bereits erwähnt, veränderbar ist. Die Maschinen- bzw. Radachse entspricht dann der Antriebswelle.

Die genannte Vorrichtung läßt sich vorzugsweise in Verbindung mit Fahrrädern, zum Beispiel Zweirädern, einsetzen, wobei die Antriebswelle der Antriebsvorrichtung mit Pedalen verbunden ist. Das auf der Radachse, zum Beispiel der Hinterradachse eines Zweirades angeordnete Antriebselement kann dann ein Zahnrad sein, welches nur in einer Drehrichtung die Hinterradachse mitnimmt und in der entgegengesetzen Drehrichtung relativ zur Hinterradachse frei läuft. Das Endlos-Antriebselement ist in diesem Fall eine geeignet ausgebildete Kette.

Soll das Drehmoment nicht verstellt werden, so läuft die erste Stellscheibe mit der zweiten Stellscheibe um, ohne daß zwischen beiden eine Relativbewegung vorhanden ist. In diesem Fall bleibt der Durchmesser des Segmentringes konstant.

Nach einer vorteilhaften Ausbildung der Erfindung ist die spiralförmige Ausnehmung in der ersten Stellscheibe eine Nut, wobei die zweite Stellscheibe auf der Seite der spiralförmigen Nut angeordnet ist. Die spiralförmige Nut kann mehrere Windungen in der ersten Stellscheibe aufweisen, so daß eine sehr feine Verstellung des Drehmomentes möglich ist.

Nach einer vorteilhaften Weiterbildung der Erfindung trägt die eine Stellscheibe an ihrem äußeren Umfangsbereich und an der der anderen Stellscheibe zugewandten Seite ein Ritzel, das um eine parallel zur Antriebswelle verlaufende Achse frei drehbar ist. Das Ritzel kämmt mit einem an der anderen Stellscheibe angebrachten ersten Zahnrad. Darüberhinaus ist ein Außenring vorhanden, der an seinem inneren Umfang einen zweiten Zahnkranz trägt, mit dem das Ritzel ebenfalls kämmt. Dieser Außenring ist relativ zur Lagereinrichtung nur blockierbar, wenn sich die blockierbare Stellscheibe im unblockierten Zustand befindet.

Auf diese Weise wird erreicht, daß der Durchmesser des Segmentringes zur Drehmomentverstellung bei Drehung der Antriebswelle in nur einer einzigen Richtung sowohl vergrößert als auch verkleinert werden kann.

Wird zunächst die erste Stellscheibe mit der spiralförmigen Nut blockiert und die zweite Stellscheibe angetrieben, so vergrößert oder verkleinert sich der Durchmesser des Segmentringes je nach Verlauf der spiralförmigen Nut in der ersten Stellscheibe. Beispielsweise sei angenommen, daß sich bei der genannten Drehrichtung der zweiten Stellscheibe der Durchmesser des Segmentringes vergrößert. Wird dann der Blockierzustand der ersten Stellscheibe aufgehoben und der Außenring blockiert, so bewegt sich bei gleicher Drehrichtung der zweiten Stellscheibe auch die erste Stellscheibe in dieser Richtung, wobei die Relativgeschwindigkeit zwischen beiden infolge des Ritzels jedoch so eingestellt ist, daß sich der Durchmesser des Segmentringes verkleinert. Es ist somit nicht mehr erforderlich, die Antriebswelle zur Veränderung des Durchmessers des Segmentringes und damit zur Einstellung des Drehmomentes in entgegengesetzte Richtungen zu drehen.

Vorteilhafterweise kann die mittels der Antriebswelle antreibbare Stellscheibe mit einer auf der Antriebswelle angeordneten Freilaufnabe fest verbunden sein, so daß die genannte Stellscheibe nur bei Drehung der Antriebswelle in einer bestimmten Richtung von dieser angetrieben wird, während sie bei Drehung der Antriebswelle in der entgegengesetzten Richtung relativ zu dieser frei läuft.

Beide Stellscheiben können vorteilhaft unmittelbar benachbart sein, wobei der Segmentring auf der der ersten Stellscheibe abgewandten Seite der zweiten Stellscheibe angeordnet ist. Auf diese Weise wird eine sehr robuste und kompakte Antriebsvorrichtung erhalten.

Nach einer vorteilhaften Ausbildung der Erfindung ist die zweite Stellscheibe fest mit der Freilaufnabe verbunden. Diese zweite Stellscheibe trägt das Ritzel, wobei der erste Zahnkranz an der ersten Stellscheibe angebracht ist. Der Außenring ist zu seiner Positionierung wenigstens teilweise zwischen der ersten und der zweiten Stellscheibe angeordnet, die ihrerseits radial verlaufende Durchgangsschlitze aufweist. Durch diese Maßnahmen wird die Stabilität der Antriebseinrichtung und ihre Zuverlässigkeit noch weiter erhöht.

Die Segmente des Segmentringes sind durch in der Ausnehmung bzw. Nut der ersten Stellscheibe gleitende Blockierstücke gehalten, die über einen einen Durchgangsschlitz durchgreifenden Bolzen mit einem Segment verbunden sind. Hierdurch wird verhindert, daß sich die Segmente von der zweiten Stellscheibe lösen können. Die Verbindung zwischen den jeweiligen Blockierstücken und den Segmenten ist dabei so ausgebildet, daß eine Einklemmung der zweiten Stellscheibe zwischen einem Blockierstück und einem Segment verhindert wird.

Die Segmente tragen an ihrem äußeren Umfang vorzugsweise Vertiefungen zur Aufnahme des Endlos-Antriebselementes. Die Vertiefungen besitzen in einer Ebene, in der auch die Zentrumslinie der Antriebswelle verläuft. einen Querschnitt mit V-förmig verlaufenden Seitenwänden, wobei das Endlos-Antriebselement einen entsprechenden Querschnitt aufweist. Hierdurch wird eine besonders gute Kraftübertragung vom Segmentring auf das Endlos-Antriebselement erhalten. Dieses kann beispielsweise ein Keilriemen oder eine Kette sein, an deren Kettengliedern beidseitig keilförmige Elemente zur Bildung eines V-förmigen Kettenquerschnitts angebracht sind.

Nach einer anderen vorteilhaften Weiterbildung der Erfindung besitzen die Vertiefungen der Segmente in einer Ebene, in der auch die Zentrumslinie der Antriebswelle verläuft, einen Querschnitt mit V-förmig verlaufenden Seitenwänden, wobei parallel zu den Seitenwänden und durch Abstandselemente im Abstand von Ihnen gehaltene Klemmbügel angeordnet sind, deren in der Vertiefung unten liegende Enden abgewinkelt sind und wengistens annähernd parallel zur Antriebswelle verlaufen. Die Klemmbügel tragen an ihren einander zugewandten Seiten keilförmig ausgebildete Druckelemente, deren einander zugewandte Seiten unter rechtem Winkel zur Längsrichtung der Antriebswelle stehen. Das zugehörige Endlos-Antriebselement besitzt einen entsprechenden rechteckförmigen Querschnitt.

Durch diese spezielle Ausbildung der Segmente wird erreicht, daß eine konventionelle Kette mit parallel zueinander verlaufenden Kettenseiten vom Segmentring angetrieben werden kann. Bei Belastung wird die Kette auf die unten im Segment liegenden Enden der Klemmbügel gedrückt, welche infolge der Abstandselemente, die zum Beispiel Metallkugeln sein können, dann aufeinanderzubewegt werden. Hierdurch werden die keilförmig ausgebildeten Druckelemente, die zum Beispiel aus einem abriebfesten Kunststoff oder einem anderen geeigneten elastischen Material bestehen, gegen die Kette gedrückt, so daß diese festgeklemmt wird.

Vorteilhaft liegen die Metallkugeln in radial verlaufenden Rillen, die im Segmentring und im Klemmbügel gegenüberliegend eingebracht sind, um eine definiertere Bewegung dieser Kugeln zu erhalten. Darüberhinaus ist der Raum zwischen den Klemmbügeln und dem jeweiligen Segment mit einem elastischen Material ausgefüllt, damit die Klemmbügel bei Druckentlastung wieder die ursprüngliche Position annehmen können.

Nach einer weiteren vorteilhaften Ausbildung der Erfindung besteht ein Segment aus einem an der zweiten Stellscheibe anliegenden ersten Segmentteil und einem separaten, in axialer Richtung relativ zum ersten Segmentteil bewegbaren zweiten Segmentteil. Dieser zweite Segmentteil ist zur Einklemmung des Endlos-Antriebselementes gegen den ersten Segmentteil mittels beide Segmentteile miteinander verbindender Betätigungselemente bewegbar.

Als Betätigungselemente sind wenigstens ein Klemmwinkel und eine Lasche vorhanden, wobei ein Schenkel des Klemmwinkels, welcher im Scheitelbereich um eine mit dem ersten Segmentteil verbundene Achse drehbar ist, ein Seitenteil zur Bildung der Vertiefung am äußeren Umfang des Segmentes darstellt.

Mit Hilfe eines aus solchen Segmenten aufgebauten Segmentringes ist ein noch besserer Transport des Endlos-Antriebselementes gewährleistet.

Wie bereits erwähnt, kann die Antriebsvorrichtung nach der Erfindung zum Antreiben beliebiger Drehachsen von Maschinen bzw. Rädern verwendet werden. Dabei können sowohl auf der Antriebswelle als auch auf der angetriebenen Welle Vorrichtungen der genannten Art angeordnet sein.

Vorteilhafterweise läßt sich die genannte Vorrichtung auch bei Fahrrädern einsetzen, wobei die Antriebswelle mit Pedalen verbunden ist, während das Endlos-Antriebselement kettenförmig ausgebildet ist und ein auf der anzutreibenden Achse des Fahrrades angeordnetes Zahnrad umschlingt.

Anhand der Zeichnung wird ein Ausführungsbeispiel der Erfindung näher erläutert. Es zeigen :

Fig. 1 eine Prinzipdarstellung zur Erläuterung der Wirkungsweise der erfindungsgemäßen Antriebsvorrichtung,

Fig. 2 ein Axialschnitt einer mit einem Fahrrad verbundenen Antriebsvorrichtung nach der Erfindung,

Fig. 3 und 4 einen Axialschnitt und eine Draufsicht der ersten Stellscheibe mit spiralförmig ausgebildeter Nut,

Fig. 5 und 6 einen Axialschnitt und eine Draufsicht der zweiten Stellscheibe mit Radialschlitzen,

Fig. 7 bis 9 einen Segmentring bzw. die den Segmentring bildenden Segmente in Seiten- und Vorderansicht,

Fig. 10 einen Querschnitt durch ein Segment in einer Ebene, in der die Zentrumslinie der Antriebswelle verläuft,

Fig. 11 eine Draufsicht auf einen Schnitt eines weiteren Segmentes,

Fig. 12 eine Seitenansicht des weiteren Segmentes, und

Fig. 13 eine Radachse mit einem als Antriebselement dienenden Zahnrad, auf welchem ein kettenförmiges Endlos-Antriebselement liegt.

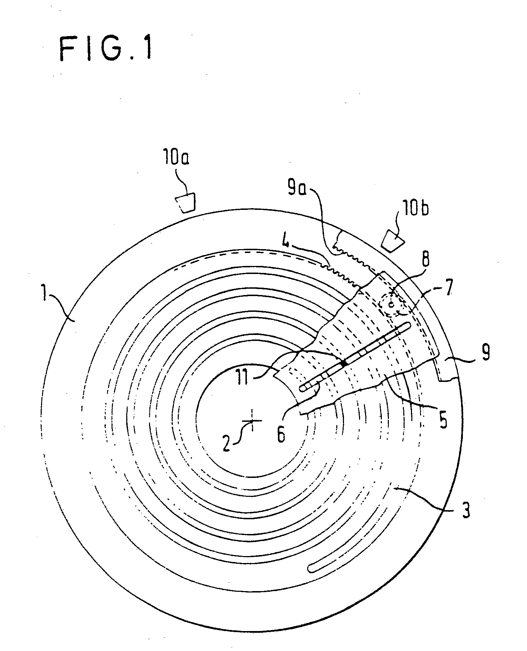

Die Fig. 1 zeigt eine Prinzipdarstellung zur Erläuterung der Wirkungsweise der erfindungsgemäßen Vorrichtung. Sie besitzt eine erste Stellscheibe 1, die um eine Zentrumsachse 2 drehbar angeordnet ist. In der ersten Stellscheibe 1 befindet sich zum Beispiel auf einer Seite eine spiralförmige Nut 3, die um die Zentrumsachse 2 herum verläuft und sich zum Rand der ersten Stellscheibe 1 hin öffnet. An der Seite der spiralförmigen Nut 3 ist die erste Stellscheibe 1 weiterhin mit einem koaxial zur Zentrumsachse 2 liegenden ersten Zahnkranz 4 vorzugsweise einstückig verbunden. Dieser erste Zahnkranz 4 ist der Übersicht wegen nur teilweise dargestellt.

Koaxial zur Zentrumsachse 2 und unmittelbar auf der ersten Stellscheibe 1 liegend ist eine zweite Stellscheibe 5 angeordnet, in der sich radiale Durchgangsschlitze 6 befinden. Diese radialen Schlitze 6 erstrecken sich über den Bereich der spiralförmigen Nut 3 in der ersten Stellscheibe 1. Auch die zweite Stellscheibe 5 ist der Übersicht wegen nur teilweise als Sektor dargestellt. Mit der zweiten Stellscheibe 5 ist ein Ritzel 7 verbunden, welches um eine Achse 8 drehbar ist, die parallel zur Zentrumsachse 2 verläuft und von der zweiten Stellscheibe 5 gehalten wird. Das Ritzel 7 liegt dabei zwischen der ersten Stellscheibe 1 und der zweiten Stellscheibe 5 und ist so positioniert, daß es mit dem ersten Zahnkranz 4 auf der ersten Stellscheibe 1 kämmt.

Zwischen der ersten Stellscheibe 1 und der zweiten Stellscheibe 5 ist weiterhin ein Außenring 9 drehbar positioniert, der ebenfalls koaxial zur Zentrumsachse 2 liegt. Er ist durch die genannten beiden Stellscheiben 1 und 5 gegen axiale Verschiebungen gesichert. Dieser Außenring 9 trägt ein seinem inneren Umfang einen zweiten Zahnkranz 9a, mit dem das Ritzel 7 ebenfalls kämmt.

Mittels einer nicht dargestellten Blockiervorrichtung können sowohl die erste Stellscheibe 1 als auch der Außenring 9 wechselweise blockiert werden, indem beispielsweise Stopperelemente 10a bzw. 10b auf ihren äußeren Umfang aufgedrückt werden. Eine gleichzeitige Blockierung der Elemente 1 und 9 durch die Stopperelemente 10a und 10b ist nicht möglich. Jedoch können gleichzeitig beide Stopperelemente 10a und 10b gelöst sein.

Auf der der ersten Stellscheibe 1 abgewandten Seite der zweiten Stellscheibe 5 ist koaxial zur Zentrumsachse 2 ein nicht dargestellter und aus einzelnen Segmenten bestehender Segmentring angeordnet, über den ein Endlos-Antriebselement, zum Beispiel eine Kette, zu einer anzutreibenden Achse verläuft. Ein derartiges Segment ist in Fig. 1 beispielsweise entlang des Radialschlitzes 6 bewegbar, wobei es weiterhin mittels eines Ansatzes in die spiralförmige Nut greift, so daß letztlich seine Bewegungsbahn durch die spiralförmige Nut 3 und den Radialschlitz 6 bestimmt ist. Der Übersicht wegen ist der genannte Ansatz unter Fortlassung des Segmentes als Punkt 11 eingezeichnet.

Wird die zweite Stellscheibe 5 durch eine Antriebseinrichtung, die später genauer beschrieben wird, beispielsweise in Uhrzeigerrichtung gedreht, und werden die erste Stellscheibe 1 und der Außenring 9 nicht blockiert, so wird die erste Stellscheibe über den Ansatz 11 mit der zweiten Stellscheibe 5 mitgenommen, so daß sie sich in gleicher Richtung und mit gleicher Geschwindigkeit wie die zweite Stellscheibe 5 bewegt. Eine Durchmesserveränderung des Segmentringes tritt in diesem Falle nicht ein.

Wird dagegen die erste Stellscheibe 1 durch den Stopper 10a blockiert, bzw. relativ zur Zentrumsachse 2 stillgesetzt und nur die zweite Stellscheibe 5 im Uhrzeigersinn bewegt, so wird der Ansatz 11 in der spiralförmigen Nut 3 im Uhrzeigersinn nach außen geführt, wobei sich der Durchmesser des Segmentringes vergrößert. Der Stopper 10b ist dabei vom Außenring 9 gelöst, so daß dieser ebenfalls bewegbar ist.

Zur Verringerung des Segmentringdurchmessers bei gleichzeitiger Drehung der zweiten Stellscheibe 5 im Uhrzeigersinn wird die erste Stellscheibe 1 gelöst, während der Außenring 9 durch den Stopper 10b blockiert wird. Die Achse 8 bewegt sich dabei mit der zweiten Stellscheibe 5 ebenfalls im Uhrzeigersinn, während das Ritzel 7 infolge des feststehenden Außenringes 9 bzw. feststehenden zweiten Zahnkranzes 9a entgegengesetzt zum Uhrzeigersinn um die Achse 8 gedreht wird. Hierdurch wird über den ersten Zahnkranz 4 die erste Stellscheibe 1 ebenfalls in Uhrzeigersinn angetrieben, jedoch mit einer gegenüber der zweiten Stellscheibe 5 größeren Geschwindigkeit, so daß der Ansatz 11 in der Nut 3 zum Zentrum der Spirale bewegt wird. Der Durchmesser des Segmentringes wird dadurch kontinuierlich verkleinert. Auf diese Weise wird eine Vorrichtung zur stufenlosen Drehmomentverstellung erhalten.

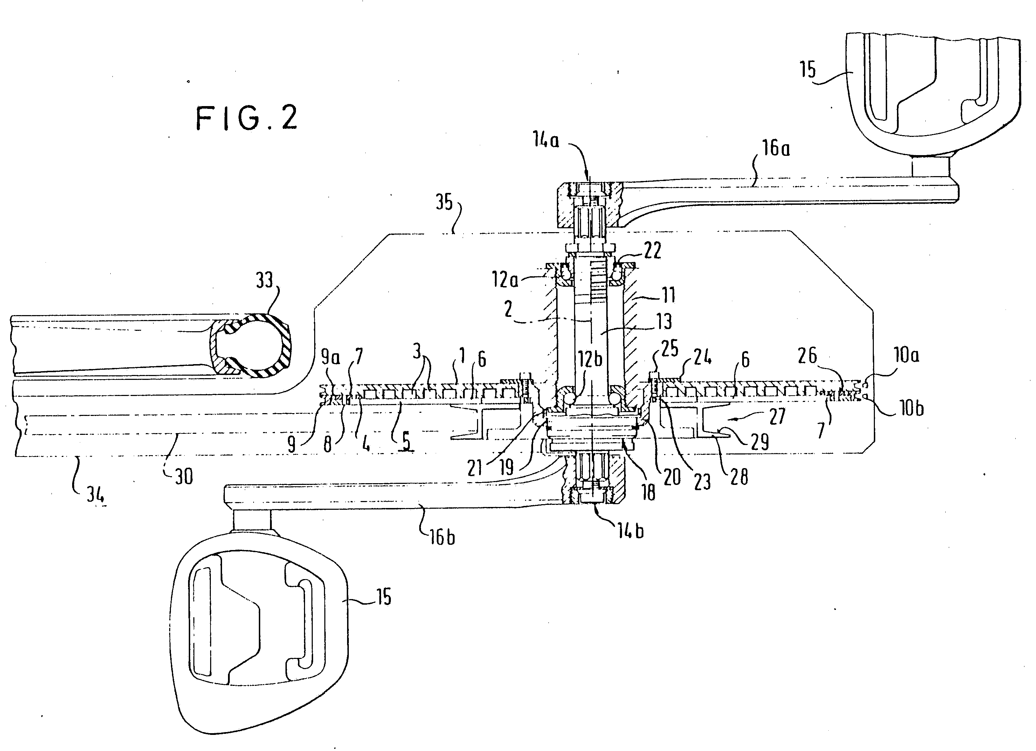

In Fig. 2 ist eine Vorrichtung nach der Erfindung in Verbindung mit einem Zweirad dargestellt. Dabei sind gleiche Teile wie in Fig. 1 mit gleichen Bezugszeichen versehen.

Mit Hilfe eines am Rahmen des Zweirades befestigten Lagergehäuses 11 sowie über Kugellager 12a und 12b ist eine Antriebswelle 13 drehbar gelagert, an deren Enden über geeignete Steck- bzw. Schraubverbindungen 14a, 14b mit Pedalen 15 versehene Hebelarme 16a, 16b befestigt sind. Auf der Antriebswelle 13 ist eine Freilaufnabe 18 gelagert, die bei Drehung der Antriebswelle 13 in einer Richtung mitgenommen bzw. bei Drehung der Antriebswelle 13 in der entgegengesetzten Richtung freiläuft. Mit der Freilaufnabe 18 ist über eine Zahnkranz-Steckverbindung 19 eine Hülse 20, 21 fest verbunden, mit deren Hilfe das Getriebe relativ zur Antriebswelle 13 axial verschiebbar ist. Durch diese Hülse 20, 21 wird erreicht, daß der Abstand zwischen den Lagern 12a, 12b relativ groß gewählt werden kann. Das Lager 12a wird mit der Dichtung 22 gegen äußere Einflüsse geschützt.

Mit der Hülse 20 ist die zweite Stellscheibe 5, die die radial verlaufenden Durchgangsschlitze 6 aufweist, ebenfalls fest verbunden, und zwar vorzugsweise über eine weitere Zahnkranz-Steckverbindung 23. Auf der Hülse 20 ist darüberhinaus die erste Stellscheibe 1 drehbar gelagert, welche unmittelbar an der zweiten Stellscheibe 5 anliegt und mit Hilfe eines Ringes 24, der mit Schrauben 25 an der Hülse 20 befestigt ist, gegen axiale Verschiebungen gesichert ist. Die spiralförmige Nut 3 befindet sich dabei an der der zweiten Stellscheibe 5 zugewandten Seite der ersten Stellscheibe 1.

Die erste Stellscheibe 1 besitzt an der zur zweiten Stellscheibe 5 gerichteten Seite weiterhin eine Ausnehmung 26 bzw. Stufe, die an ihrer senkrecht zur Scheibenebene verlaufenden Fläche den ersten Zahnkranz 4 trägt. Mit diesem ersten Zahnkranz 4 kämmt das Ritzel 7, das auf einer Achse 8 drehbar gelagert ist, welche mit der zweiten Stellscheibe 5 fest verbunden ist. Der Außenring 9 greift mit einem Teil zwischen die erste und die zweite Stellscheibe 1 bzw. 5 und trägt an seinem inneren Umfang den zweiten Zahnkranz 9a, mit dem das Ritzel 7 ebenfalls kämmt. Der Außenring 9 ist durch die beiden Stellscheiben 1 und 5 gegen axiale Verschiebungen gesichert.

Zur Blockierung der ersten Stellscheibe 1 bzw. des Außenringes 9 sind Blockierelemente 10a und 10b vorhanden, die der Übersicht wegen nur symbolisch dargestellt sind. Sie können beispielsweise in entsprechende Nuten am Umfang der ersten Stellscheibe 1 bzw. des Außenringes 9 eingreifen und diese relativ zum Lagergehäuse 11 festsetzen. Die Blockierelemente 10a bzw. 10b sind vorteilhaft vom Lenker des Zweirades aus zu bedienen. Sie können beispielsweise durch schlingenförmige Elemente realisiert werden, die in den entsprechenden Nuten am äußeren Umfang der ersten Stellscheibe 1 bzw. des Außenringes 9 verlaufen.

An der der ersten Stellscheibe 1 abgewandten Seite der zweiten Stellscheibe 5 ist der bereits erwähnte Segmentring 27 angeordnet. Er besteht aus so vielen einzelnen Segmenten 28, wie radiale Schlitze 6 in der zweiten Stellscheibe 5 vorhanden sind. Die einzelnen Segmente 28 liegen dicht an der zweiten Stellscheibe 5 an und sind mit dieser verschiebbar verbunden, wie noch genauer erläutert wird. Ein weiterer Ansatz bei jedem Segment 28 greift darüberhinaus in die spiralförmige Nut ein, damit das Segment 28 kontinuierlich in radialer Richtung zur Veränderung des Durchmessers des Segmentringes 27 verschoben werden kann.

Die einzelnen Segmente 28 weisen am äußeren Umfang des Segmentringes 27 Vertiefungen 29 auf, in denen ein Endlos-Antriebselement 30 verläuft, das infolge der Drehung des Segmentringes 27 angetrieben wird. Dieses Endlos-Antriebselement, beispielsweise ein Riemen oder eine Kette, umschlingt ein auf der hinteren Achse 31 (Fig. 13) des Zweirades angeordnetes Antriebselement 32 zum Antrieb des ebenfalls mit der hinteren Achse 31 fest verbundenen Hinterrades 33. Die hintere Achse 31 kann beispielsweise an einem Antriebsausleger 34 einseitig gelagert sein, durch den auch das Endlos-Antriebselement 30 verläuft. Die gesamte Antriebsvorrichtung nach der Erfindung ist mit einer Schutzkappe 35 zum Schutz gegen äußere Einflüsse hermetisch abgeschlossen.

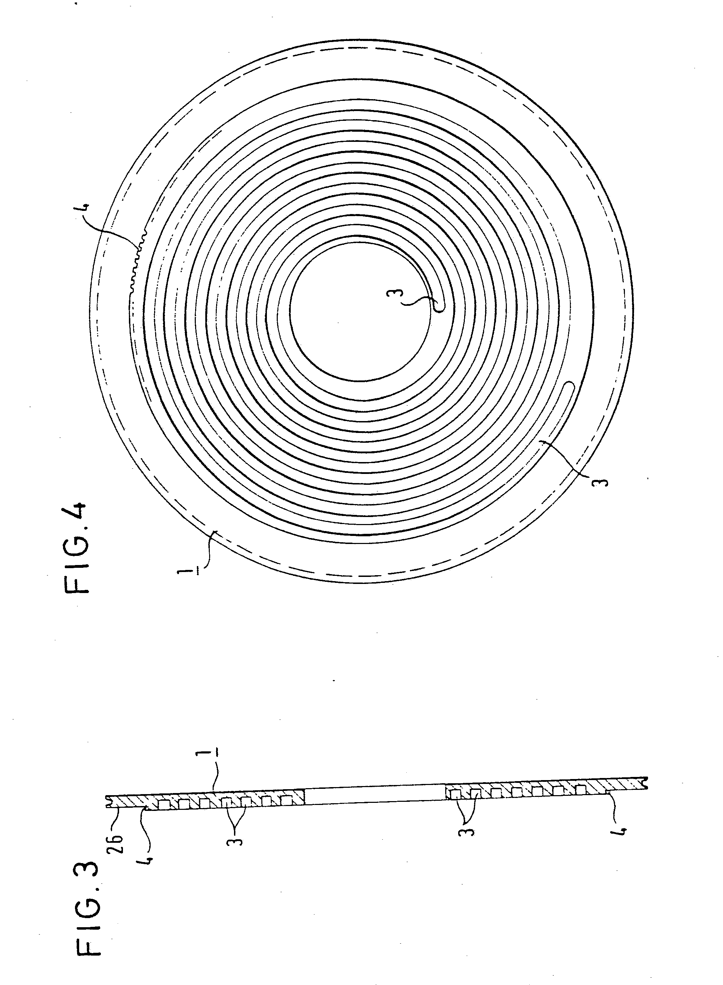

In den Figuren 3 und 4 ist die erste Stellscheibe 1 genauer dargestellt. Sie besteht vorzugsweise aus Aluminium und besitzt einen Außendurchmesser von circa 270 mm, einen Innendurchmesser von 72 mm und eine Dicke von 7 mm. Alle Abmessungen können selbstverständlich innerhalb eines Toleranzbereiches schwanken. Die einseitig in die erste Stellscheibe 1 eingebrachte Spiralnut besitzt eine Nutenbreite von etwa 6 mm und eine Steigungshöhe pro Umdrehung von ca. 10 mm. Die Tiefe der Spiralnut 3 beträgt etwa 4,6 mm, während die axiale Tiefe der stufenförmigen Ausnehmung 26 ca. 2,1 mm beträgt.

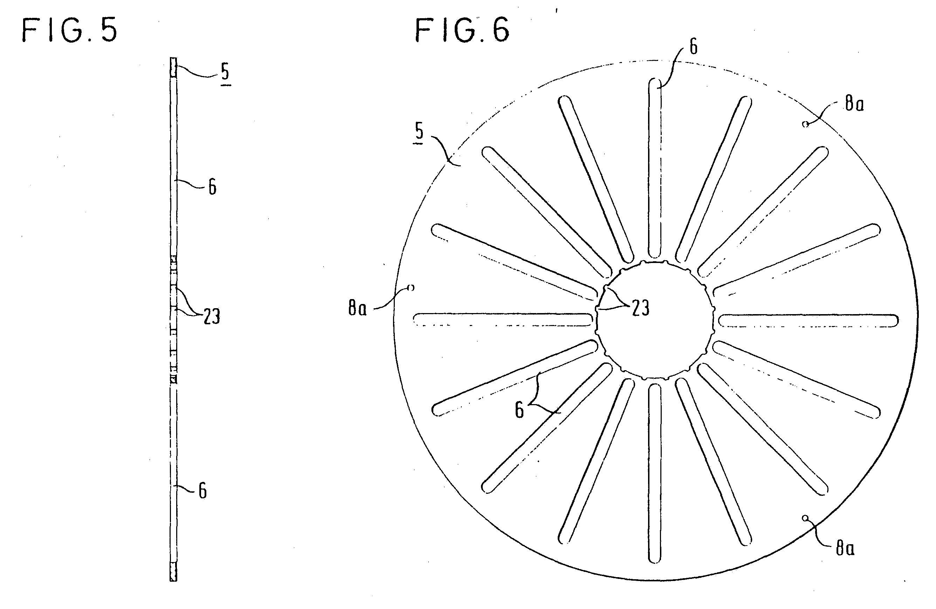

Die genaue Ausbildung der zweiten Stellscheibe 5 ist in den Figuren 5 und 6 näher erläutert. Sie besteht beispielsweise aus Federstahl und besitzt einen Durchmesser von 260 mm, sowie eine Dicke von ca. 3 mm. Es sind insgesamt 16 radial verlaufende und unter gleichen Winkelabständen angeordnete Durchgangsschlitze 6 vorhanden, die eine radiale Ausdehnung von 58 mm und eine Breite von ca. 6 mm besitzen. Alle Maße können selbstverständlich innerhalb eines Toleranzbereiches schwanken. Der innere Umfang der zweiten Stellscheibe 5 ist mit zahnförmigen Vertiefungen versehen, um die bereits erwähnte Zahnkranz-Steckverbindung 23 zur festen Verbindung der zweiten Stellscheibe 5 mit der Hülse 20 zu realisieren. Der Durchmesser dieser Zentralbohrung beträgt ca. 58 mm. Unter gleichen Winkelabständen sind am äußeren Umfang der zweiten Stellscheibe 5 drei Bohrungen 8a eingebracht, die zur Aufnahme von Steckachsen 8 dienen, auf denen Ritzel 7 gelagert sind, wie in Fig. 2 dargestellt. Diese Ritzel 7 besitzen eine solche axiale Ausdehnung, daß sie noch innerhalb der stufenförmigen Ausnehmung der ersten Stellscheibe 1 Platz finden.

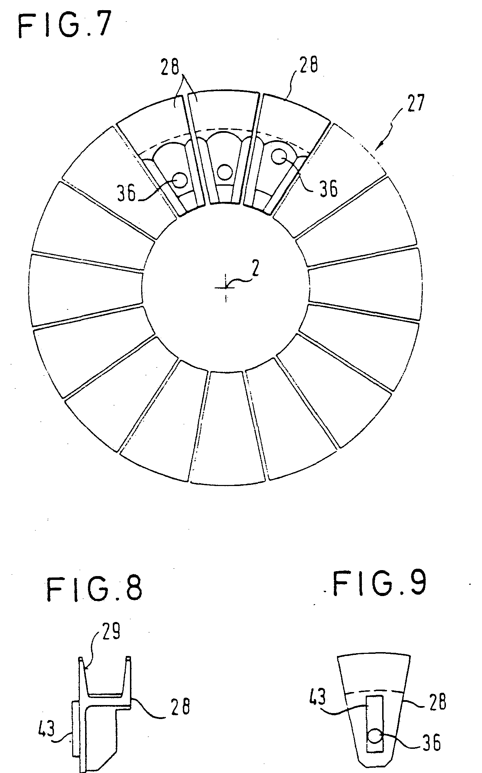

In den Fig. 7 bis 9 sind der Segmentring 27 sowie eine Seiten- und Draufsicht der Segmente 28 gezeigt. Der Segmentring 27 nach Fig. 7 besitzt sechzehn voneinander getrennte Segmente 28, die bis auf die Lage von Bohrungen 36 identisch sind und beispielsweise aus Aluminium bestehen. Die Bohrungen 36, die parallel zur Zentrumsachse 2 verlaufen, sind in Übereinstimmung mit der spiralförmigen Nut 3 in der ersten Stellscheibe 1 in die Segmente 28 eingebracht. Das heißt, sie folgen der Bahn der spiralförmigen Nut 3 und besitzen über 360° gesehen ebenfalls eine Ganghöhe von 10 mm. Wie bereits erwähnt, greifen die Ansätze 43 in den Fig. 8 und 9 in die radialen Schlitze 6 der zweiten Stellscheibe 5 ein, so daß durch sie die Segmente 28 in radialer Richtung geführt werden. Die Ansätze 43 besitzen beispielsweise eine Längsausdehnung von 20 mm und eine Breite von 6 mm. Zur Verbindung der Segmente 28 mit der zweiten Stellscheibe 5 sind sogenannte Blockierstücke (nicht dargestellt) vorgesehen, die in der spiralförmigen Nut 3 der ersten Stellscheibe 1 gleitend angeordnet sind, und die einen Bolzen besitzen, der die Bohrung 36 eines Segmentes 28 durchsetzt. Am Ende des Bolzens befindet sich ein Gewinde, auf das eine Mutter zur Sicherung des Segmentes 28 aufschraubbar ist. Diese Verbindung ist so ausgebildet, daß eine Einklemmung der zweiten Stellscheibe 5 durch die Blockierstücke und die Segmente 28 vermieden wird. Blockierstück und Bolzen können dabei einstückig ausgebildet sein.

Wie bereits im Zusammenhang mit der Fig. 2 erwähnt, besitzen die Segmente 28 am äußeren Umfang des Segmentringes 27 gelegene Vertiefungen 29, die in einer Ebene, in der auch die Zentrumsachse 2 verläuft, einen Querschnitt mit V-förmig verlaufenden Seitenwänden aufweisen. Diese Vertiefungen 29 dienen zur Aufnahme eines keilförmigen Endlos-Antriebselementes 30 mit entsprechendem Querschnitt. Soll das bereits erwähnte Hinterrad 33 angetrieben werden, so wird bei Drehung des Segmentringes 27 das keilförmige Endlos-Antriebselement in die Vertiefungen 29 mit ebenfalls keilförmigem Querschnitt gedrückt, so daß eine einwandfreie Kraftübertragung zustandekommt. Als keilförmig ausgebildetes Endlos-Antriebselement 30 kann beispielsweise eine konventionelle Fahrradkette verwendet werden, an deren Kettengliedern beidseitig keilförmige Elemente zur Bildung eines keilförmigen Kettenquerschnitts angebracht sind. Beide Kettenseiten verlaufen dabei unter einem spitzen Winkel zueinander. Die erwähnten keilförmigen Elemente können beispielsweise aus einem Gummi oder einem anderen geeigneten elastischen Kunststoff bestehen.

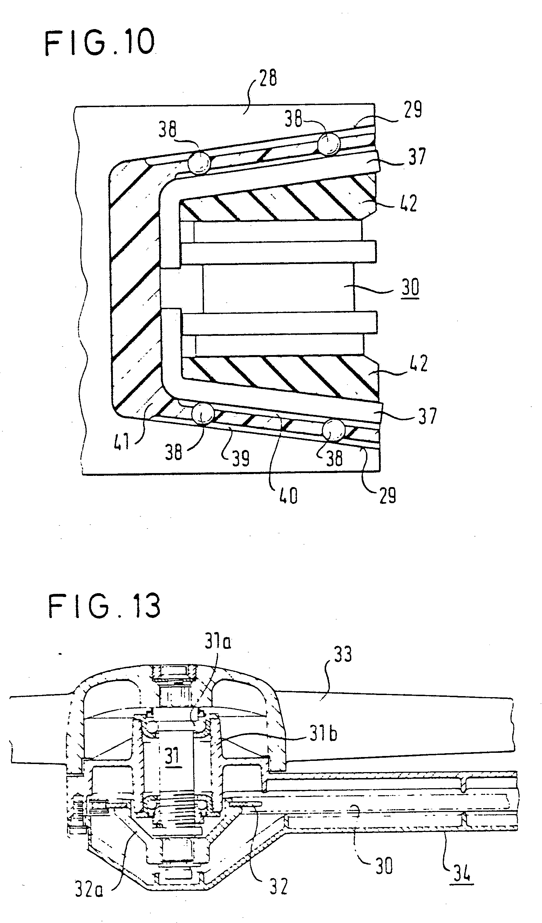

Um eine konventionelle Fahrradkette 30 ohne daran seitlich angebrachte keilförmige Elemente verwenden zu können, sind in der V-förmigen Vertiefung 29 innerhalb der Segmente 28 sogenannte Klemmbügel 37 beidseitig angeordnet, wie der Fig. 10 zu entnehmen ist. Diese Klemmbügel 37 sind am unteren Ende der Vertiefung 29 abgewinkelt und verlaufen dort parallel zur Zentrumsachse 2. Sie sind ferner mit Hilfe von Metallkugeln 38 oder anderen geeigneten Elementen gegenüber den inneren Wänden eines Segmentes 28 beabstandet. Die Metallkugeln 38 sind dabei zur besseren Führung in praktisch radial verlaufenden Schlitzen 39, 40 gelagert. Zwischen den Klemmbügeln 37 und den inneren Seitenwänden der Segmente 28 ist ein elastisches Material 41 angeordnet, das beispielsweise ein geeignetes Gummi sein kann. In diesem Material 41 sind die Kugeln 38 eingebettet. An den einander zugewandten Seiten der Klemmbügel 37 sind jeweils keilförmige elastische Druckelemente 42 derart angebracht, daß ihre einander zugewandten Seiten rechtwinklig zur Zentrumsachse 2 verlaufen. Auf diese Weise entsteht zwischen den Druckelementen 42 ein Hohlraum mit rechteckigem Querschnitt, in den eine konventionelle Kette 30 mit parallel zueinander verlaufenden Kettenseiten eingebracht werden kann. Bei Belastung der Kette 30 drückt diese die abgewinkelten Enden der Klemmbügel 37 in Richtung auf die Zentrumsachse 2, so daß diese Klemmbügel 37 in der Fig. 10 insgesamt nach unten und infolge der Metallkugeln 38 gleichzeitig aufeinanderzubewegt werden. Dies hat zur Folge, daß die Kette 30 zwischen den Druckelementen 42 eingeklemmt wird, so daß eine einwandfreie Kraftübertagung zwischen den Segmenten 28 und der Kette 30 zustandekommt. Bei Entlastung der Kette 30 werden die Klemmbügel 37 durch das elastische Material 41 wieder nach oben geführt, so daß die Kette 30 von den Druckelementen 42 freigegeben wird.

Das elastische Material 41 ist fest mit den Segmenten 28 und den Klemmbügeln 37 verbunden, an denen die Druckelemente 42 fest angeordnet sind. Die feste Verbindung zwischen den Elementen 28, 41, 37 und 42 kann beispielsweise durch einen Vulkanisationsprozeß erfolgen. Entsprechendes gilt auch für die Befestigung der keilförmigen Elemente an beiden Seiten einer konventionellen Kette, wie bereits zuvor erwähnt.

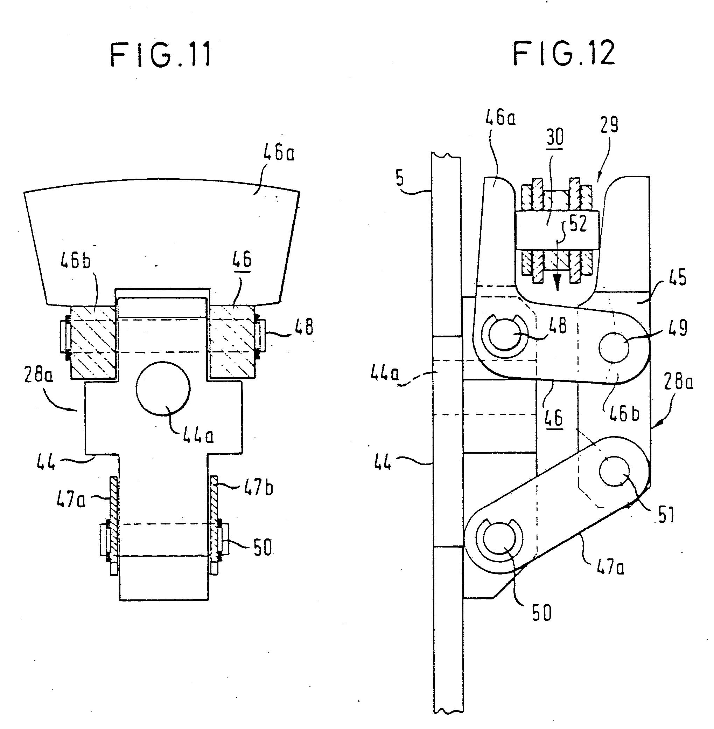

In den Figuren 11 und 12 ist ein weiteres Segment 28a dargestellt, wobei die Figur 11 eine Draufsicht auf einen Schnitt zeigt, der parallel zu den Stellscheiben 1 und 5 verläuft, während in der Figur 12 die Seitenansicht des weiteren Segments 28a dargestellt ist.

Das Segment 28a besteht aus einem ersten Segmentteil 44, der an der zweiten Stellscheibe 5 anliegt. Das erste Segmentteil ist, wie bereits erwähnt, mittels eines nicht dargestellten Bolzens, der durch eine Bohrung 44a im ersten Segmentteil 44 hindurchgeführt wird, mit den genannten Stellscheiben 1 und 5 verbunden, so daß er durch diese in radialer Richtung der zweiten Stellscheibe 5 bewegt werden kann.

Über dem ersten Segmentteil 44 liegt ein zweiter Segmentteil 45, der in axialer Richtung der Antriebswelle 13 relativ zu diesem beabstandet ist. Beide Segmentteile 44 und 45 sind durch Betätigungselemente 46 und 47 miteinander verbunden und können durch diese relativ zueinander bewegt werden, derart, daß sich ihr gegenseitiger Abstand vergrößert oder verkleinert. Das obere bzw. radial außen liegende Betätigungselement besteht aus einem winkelförmigen Teil 46, der im Scheitelbereich um eine parallel zur Ebene der zweiten Stellscheibe 5 verlaufende Achse 48 drehbar angeordnet ist. Die Achse 48 verläuft ferner in tangentialer Richtung relativ zur zweiten Stellscheibe 5. Der Winkel 46 besitzt zwei Schenkel 46a und 46b, die praktisch rechtwinklig zueinander verlaufen. Dabei stellt der radial nach außen weisende Schenkel 46a ein Seitenteil zur Bildung der bereits zuvor genannten Vertiefung am äußeren Umfang des Segments 28a dar. Der axial verlaufende Schenkel 46b des Winkels 46 ist mit dem zweiten Segmentteil 45 über eine Achse 49 verbunden, die parallel zur Achse 48 verläuft.

Beide Segmentteile 44, 45 sind ferner mit Hilfe zweier Laschen 47a, 47b verbunden. Diese Laschen 47a, 47b sind beidseitig und am unteren Ende der jeweiligen Segmentteile 44, 45 angebracht. Sie sind relativ zu den Achsen 50, 51 drehbar gelagert, die die jeweiligen Segmentteile 44, 45 in einer zur Achse 48 parallelen Richtung durchsetzen.

Durch ein derart ausgebildetes Segment 28a kann ein Endlos-Antriebselement, zum Beispiel eine konventionelle Fahrradkette 30, wirksam in der bereits genannten Vertiefung 29 (vgl. Figur 12) bei Belastung eingeklemmt werden. Wirkt bei Belastung der Kette 30 eine Kraft in radialer Richtung 52, so wird der Winkel 46 um die Achse 48 im Uhrzeigersinn gedreht, während gleichzeitig der zweite Segmentteil 45 nach links in Figur 12 gegen die Kette 30 gedrückt wird. Bei Entlastung der Kette 30 kann diese dagegen leicht aus der Öffnung 29 herausgeführt werden.

Die Einzelteile des Segmentes 28a bestehen vorzugsweise aus Spritzguß, um ein möglichst leichtes Getriebe zu erhalten.

In der Fig. 13 ist ein Schnitt durch die anzutreibende Achse eines Rades 33 dargestellt. Die Achse 31 ist mit Hilfe einer Lagereinrichtung 31a, 31b am Antriebsausleger 34 gelagert und trägt auf ihrer einen Seite das anzutreibende Rad 33. Auf der anderen Seite der Achse 31 ist ein Zahnrad 32 angeordnet, das über ein trichterförmiges Element 32a mit der Achse 31 fest verbunden ist. Wird eine Vergrößerung und die Verkleinerung des Segmentringdurchmessers bei nur einer Drehrichtung der zweiten Stellscheibe 5 vorgenommen, so wird dabei auch das Zahnrad 32 nur in einer Richtung gedreht. Da die zweite Stellscheibe 5 auf der Freilaufnabe 18 (Fig. 2) angeordnet ist, wird bei Drehung der Antriebsachse 13 in entgegengesetzter Richtung das Zahnrad 32 nicht mitgedreht.

Wird dagegen der Segmentringdurchmesser durch Drehung der zweiten Stellscheibe 5 in unterschiedliche Richtungen vergrößert bzw. verkleinert, so muß sich auch das Zahnrad 32 in entgegengesetzten Richtungen drehen können. In diesem Fall ist das Zahnrad 32 auf einer Freilaufnabe angeordnet (nicht dargestellt), die mit der Achse 31 verbunden ist.

Selbstverständlich ist mit der Vorrichtung nach der Erfindung auch ein Kettenspanner verbunden (nicht dargestellt), der dafür sorgt, daß sich die Kette bei jedem eingestellten Segmentringdurchmesser stets in einem gespannten Zustand befindet.

**Patentansprüche**

1. Antriebsvorrichtung mit stufenloser Drehmomentverstellung, mit einer in einer Lagereinrichtung (11, 12a, 12b) drehbar gelagerten Antriebswelle (13), zwei koaxial zur Antriebswelle (13) angeordneten Stellscheiben (1, 5), von denen eine mit der Antriebswelle (13) antriebsverbunden ist und deren erste (1) eine wenigstens teilweise um das Zentrum herum verlaufende spiralförmige Ausnehmung (3) aufweist, während die zweite Stellscheibe (5) vom Zentrum ausgehende, radiale Durchgangsschlitze aufweist, einem koaxial zur Antriebswelle (13) angeordneten, aus einzelnen Segmenten (28) bestehenden Segmentring (27), auf dessen Umfang ein Endlos-Antriebselement (30) auflegbar ist, welche Segmente (28) Ansätze (43) besitzen, die sowohl in die spiralförmige Ausnehmung der ersten Stellscheibe als auch in die radialen Durchgangsschlitze (6) der zweiten Stellscheibe eingreifen, sowie einer Blockiereinrichtung (10a, 10b) zur Blockierung der nicht mit der Antriebswelle (13) antriebsverbundenen Stellscheibe, dadurch gekennzeichnet, daß eine der Stellscheiben (z. b. 5) an ihrem äußeren Umfangsbereich und an der der anderen Stellscheibe (z. B. 1) zugewandten Seite ein Ritzel (7) trägt, das um eine parallel zur Antriebswelle (13) verlaufende Achse (8) frei drehbar ist, daß das Ritzel (7) mit einem an der anderen Stellscheibe (z. B. 1) angebrachten ersten Zahnkranz (4) kämmt, daß ein Außenring (9) vorgesehen ist, der an seinem inneren Umfang einen zweiten Zahnkranz (9a) trägt, mit dem das Ritzel (7) ebenfalls kämmt, und daß der Außenring relativ zur Antriebswelle (13) nur dann durch die Blockiereinrichtung (10a, 10b) blockierbar ist, wenn sich die blockierbare Stellscheibe (z. B. 1) im unblockierten Zustand befindet.

2. Antriebsvorrichtung nach Anspruch 1, dadurch gekennzeichnet, daß die spiralförmige Ausnehmung in der ersten Stellscheibe (1) eine Nut (3) ist, und daß die zweite Stellscheibe (5) auf der Seite der spiralförmigen Nut (3) angeordnet ist.

3. Vorrichtung nach Anspruch 2, dadurch gekennzeichnet, daß die mittels der Antriebswelle (13) antreibbare Stellscheibe mit einer auf der Antriebswelle angeordneten Freilaufnabe (18) fest verbunden ist.

4. Vorrichtung nach Anspruch 1, 2 oder 3, dadurch gekennzeichnet, daß beide Stellscheiben (1, 5) unmittelbar benachbart sind, und daß der Segmentring (27) auf der der ersten Stellscheibe (1) abgewandten Seite der zweiten Stellscheibe (5) angeordnet ist.

5. Vorrichtung nach Anspruch 3 oder 4, dadurch gekennzeichnet, daß die zweite Stellscheibe (5) fest mit der Freilaufnabe (18) verbunden ist und die Durchgangsschlitze (6) radial verlaufen.

6. Vorrichtung nach Anspruch 5, dadurch gekennzeichnet, daß die zweite Stellscheibe (5) das Ritzel (7) trägt und der erste Zahnkranz (4) an der ersten Stellscheibe (1) angebracht ist.

7. Vorrichtung nach Anspruch 6, dadurch gekennzeichnet, daß der Außenring (9) zu seiner Positionierung wenigstens teilweise zwischen der ersten und der zweiten Stellscheibe (1, 5) angeordnet ist.

8. Vorrichtung nach einem der Ansprüche 4 bis 7, dadurch gekennzeichnet, daß die Segmente (28) durch in der Ausnehmung bzw. Nut (3) der ersten Stellscheibe (1) gleitende Blockierstücke gehalten werden, die über einen einen Durchgangsschlitz (6) durchgreifenden Bolzen mit einem Segment (28) verbindbar sind.

9. Vorrichtung nach einem der Ansprüche 1 bis 8, dadurch gekennzeichnet, daß die Segmente (28, 28a) an ihrem äußeren Umfang Vertiefungen (29) zur Aufnahme des Endlos-Antriebselementes (30) aufweisen.

10. Vorrichtung nach Anspruch 9, dadurch gekennzeichnet, daß die Vertiefungen (29) in einer Ebene, in der auch die Zentrumslinie (2) der Antriebswelle (13) verläuft, einen Querschnitt mit V-förmig verlaufenden Seitenwänden besitzen, und daß das Endlos-Antriebselement (30) einen entsprechenden Querschnitt aufweist.

11. Vorrichtung nach Anspruch 10, dadurch gekennzeichnet, daß das Endlos-Antriebselement (30) ein Keilriemen ist.

12. Vorrichtung nach Anspruch 10, dadurch gekennzeichnet, daß das Endlos-Antriebselement (30) eine Kette ist, an deren Kettengliedern beidseitig keilförmige Elemente zur Bildung eines V-förmigen Kettenquerschnitts fest angebracht sind.

13. Vorrichtung nach Anspruch 9, dadurch gekennzeichnet, daß die Vertiefungen in einer Ebene, in der auch die Zentrumslinie (2) der Antriebswelle (13) verläuft, einen Querschnitt mit V-förmig verlaufenden Seitenwänden besitzen, daß parallel zu den Seitenwänden und durch Abstandselemente (38) im Abstand von ihnen gehaltene Klemmbügel (37) angeordnet sind, deren in der Vertiefung unten liegende Enden abgewinkelt sind und wenigstens annähernd parallel zur Antriebswelle (13) verlaufen, daß die Klemmbügel (37) an ihren einander zugewandten Seiten keilförmig ausgebildete Druckelemente (42) tragen, deren einander zugewandte Seiten unter rechtem Winkel zur Längsrichtung der Antriebswelle (13) verlaufen, und daß das Endlos-Antriebselement (30) einen entsprechenden rechteckförmigen Querschnitt besitzt.

14. Vorrichtung nach Anspruch 13, dadurch gekennzeichnet, daß die Abstandselemente (38) Metallkugeln sind.

15. Vorrichtung nach Anspruch 14, dadurch gekennzeichnet, daß die Metallkugeln (38) in radial verlaufenden Rillen (39, 40) gelagert sind.

16. Vorrichtung nach Anspruch 13, 14 oder 15, dadurch gekennzeichnet, daß der Raum zwischen den Klemmbügeln (37) und dem jeweiligen Segment (28) mit einem elastischen Material (41) ausgefüllt ist.

17. Vorrichtung nach Anspruch 12 oder 13, dadurch gekennzeichnet, daß die keilförmigen Elemente bzw. die Druckelemente (42) aus elastischem Material bestehen.

18. Vorrichtung nach einem oder mehreren der Ansprüche 13 bis 17, dadurch gekennzeichnet, daß das Endlos-Antriebselement (30) eine Kette mit rechteckförmigem Querschnitt ist.

19. Vorrichtung nach Anspruch 16 und 17, dadurch gekennzeichnet, daß das elastische Material (41) und die Druckelemente (42) unlösbar mit den Klemmbügeln (37) bzw. den Segmenten (28) verbunden sind.

20. Vorrichtung nach Anspruch 9, dadurch gekennzeichnet, daß ein Segment (28a) aus einem an der zweiten Stellscheibe (5) anliegenden ersten Segmentteil (44) und einem separaten, in axialer Richtung relativ zum ersten Segmentteil (44) bewegbaren zweiten Segmentteil (45) besteht, welcher zur Einklemmung des Endlos-Antriebselementes (30) gegen den ersten Segmentteil (44) mittels beide Segmentteile (44, 45) miteinander verbindender Betätigungselemente (46, 47a, 47b) bewegbar ist.

21. Vorrichtung nach Anspruch 20, dadurch gekennzeichnet, daß als Betätigungselemente wenigstens ein Klemmwinkel (46) und eine Lasche (47a, 47b) vorhanden sind, und daß ein Schenkel (46a) des Klemmwinkels (46), welcher im Scheitelbereich um eine mit dem ersten Segmentteil (44) verbundene Achse (48) drehbar ist, ein Seitenteil zur Bildung der Vertiefung (29) am äußeren Umfang des Segmentes (28a) darstellt.

22. Fahrrad mit zwei oder mehreren Rädern, einer über Pedalen betätigbaren Antriebsvorrichtung, die zum Antreiben des Fahrrades über ein Endlos-Antriebselement mit einem auf der Achse wenigstens eines Rades angeordneten Zahnrad verbunden ist, dadurch gekennzeichnet, daß die Antriebsvorrichtung und das Endlos-Antriebselement nach einem oder mehreren der Ansprüche 1 bis 22 ausgebildet sind.

**Claims**

1. A drive device with stepless torque adjustment, comprising a drive shaft (13) rotatably mounted in a bearing device (11, 12a, 12b), two adjusting pulleys (1, 5) disposed coaxially with the drive shaft (13), one being connected for drive purposes to the drive shaft (13) and the first pulley (1) being formed with a spiral recess (3) extending at least partly around the centre, whereas the second pulley (5) has radial through-slots extending from the centre, and a segment ring (27) made up of individual segments (28) disposed coaxially with the drive shaft (13), an endless drive element (30) being mountable on the segment-ring periphery, the segments (28) having projections (43) which engage in the spiral recess in the first pulley and also in the radial through slots (6) in the second pulley, and the device also comprising a locking device (10a, 10b) for locking that pulley which is not connected for drive purposes to the drive shaft (13), characterised in that one of the pulleys (e. g. 5) carries a pinion (7) at its outer peripheral area and on the side facing the other pulley (e. g. 1), the pinion being freely rotatable around an axis (8) extending parallel to the drive shaft (13), the pinion (7) meshes with a first toothed ring (4) on the other pulley (e. g. 1), an outer ring (9) is provided and on its inner periphery carries a second toothed ring (9a) which likewise meshes with the pinion (7), and the outer ring is lockable relative to the drive shaft (13) by the locking device (10a, 10b) only when the lockable pulley (e. g. 1) is in the unlocked state.

2. A drive device according to claim 1, characterised in that the spiral recess in the first pulley (1) is a groove (3), and the second pulley (5) is disposed on the same side as the spiral groove (3).

3. A device according to claim 2, characterised in that the pulley drivable by the drive shaft (13) is permanently connected to a free-wheeling hub (18) disposed on the drive shaft.

4. A device according to claim 1, 2 or 3, characterised in that the two pulleys 1, 5 are immediately adjacent one another and the segment ring (27) is disposed on the side of the second pulley (5) remote from the first pulley (1).

5. A device according to claim 3 or 4, characterised in that the second pulley (5) is permanently connected to the free-wheeling hub (18) and the through slots (6) extend radially.

6. A device according to claim 5, characterised in that the second pulley (5) carries the pinion (7) and the first toothed ring 4 is disposed on the first pulley 1.

7. A device according to claim 6, characterised in that the outer ring (9) for the purpose of positioning is disposed at least partly between the first and the second pulley 1, 5.

8. A device according to any of claims 4 to 7, characterised in that the segments (28) are held by locking members sliding in the recess or groove (3) in the first pulley (1) and adapted to be connected to a segment (38) by a pin extending through a through-slot (6).

9. A device according to any of claims 1 to 8, characterised in that the segments (28, 28a) are formed at their outer periphery with recesses (29) for receiving the endless drive element (30).

10. A device according to claim 9, characterised in that the recesses (29) have a cross-section with V-shaped side walls in a plane in which the centre line (2) of the drive shaft (13) also extends, and the endless drive element (30) has a corresponding cross-section.

11. A device according to claim 10, characterised in that the endless drive element (30) is a V-belt.

12. A device according to claim 10, characterised in that the endless drive element (30) is a chain having links on both sides of which wedge-shaped elements are permanently disposed for forming a V-shaped chain cross-section.

13. A device according to claim 9, characterised in that the recesses have a cross-section having V-shaped side walls in a plane in which the centre line (2) of the drive shaft (13) also extends, clamp straps (37) are disposed parallel to the side walls and held spaced therefrom by spacer elements (38), the downward ends of the clamp straps in the recess being bent and extending at least approximately parallel to the drive shaft (13), and the facing sides of the clamp straps (37) bear wedged-shaped pressure elements (42) whose facing sides extend at right angles to the longitudinal direction of the drive shaft (13) and the endless drive element (30) has a corresponding rectangular cross-section.

14. A device according to claim 13, characterised in that the spacer elements (38) are metal balls.

15. A device according to claim 14, characterised in that the metal balls (38) are disposed in radial grooves (39, 40).

16. A device according to claim 13, 14 or 15, characterised in that the space between the clamp straps (37) and the respective segment (28) is filled with a resilient material (41).

17. A device according to claim 12 or 13, characterised in that the wedged-shaped elements and/or the pressure elements (42) are made of resilient material.

18. A device according to one or more of claims 13 to 17, characterised in that the endless drive element (30) is a chain having a rectangular cross-section.

19. A device according to claims 16 and 17, characterised in that the resilient material (41) and the pressure elements (42) are non-releaseably connected to the clamp straps (37) and/or the segments (28).

20. A device according to claim 9, characterised in that a segment (28a) comprises a first part (44) adjacent the second pulley (5) and a separate second part (45) moveable in the axial direction relative to the first part (44) and adapted to be moved by actuating elements (46, 47a, 47b) interconnecting the two segment parts (44, 45) in order to clamp the endless drive element (30) against the first segment part (44).

21. A device according to claim 20, characterised in that the actuating elements comprise at least one angular clamping member (46) and a link plate (47a, 47b), and one limb (46a) of the clamping member (46), which is rotatable in its apex region around an axis or pivot (48) connected to the first segment part (44), constitutes a side part for forming the recess (29) on the outer periphery of the segment (28).

22. A bicycle having two or more wheels and a pedal-actuated drive device connected to a gearwheel disposed on the axle of at least one wheel in order to drive the bicycle via an endless drive element, characterised in that the drive device and the endless drive element are constructed according to one or more of claims 1 to 22.

## Revendications

1. Dispositif d'entraînement à variation continue du couple, comprenant un arbre d'entraînement (13) monté à rotation dans un dispositif de palier (11, 12a, 12b), deux disques de réglage (1, 5), disposés coaxialement à l'arbre d'entraînement (13), dont l'un est relié pour l'entraînement à l'arbre d'entraînement (13) et dont le premier (1) présente un évidement (3) en forme de spirale passant, au moins en partie, autour du centre, tandis que le deuxième disque de réglage (5) comporte des fentes de passage radiales partant du centre, un anneau segmenté (27), disposé coaxialement à l'arbre d'entraînement (13), constitué par des segments individuels (28), sur la périphérie duquel peut s'appliquer un élément d'entraînement sans fin (30), ces segments (28) comportant des saillies (43) qui engrènent aussi bien dans l'évidement en spirale du premier disque de réglage que dans les fentes de passage (6) radiales du deuxième disque de réglage, et comprenant aussi un dispositif de blocage (10a, 10b) pour bloquer le disque de réglage, qui n'est pas relié pour entraînement avec l'arbre d'entraînement, ledit dispositif d'entraînement étant caractérisé en ce qu'un des disques de réglage (5 par exemple) porte, dans sa région périphérique extérieure et du côté tourné vers l'autre disque de réglage (1 par exemple), un pignon (7) qui peut tourner librement autour d'un axe (8) parallèle à l'arbre d'entraînement (13) ; en ce que le pignon (7) engrène avec une première couronne dentée (4) montée sur l'autre disque de réglage (1 par exemple) ; en ce qu'il est prévu un anneau extérieur (9) qui porte à sa périphérie intérieure une deuxième couronne dentée (9a), avec laquelle le pignon (7) engrène également ; et en ce que l'anneau extérieur peut être bloqué par le dispositif de blocage (10a, 10b) par rapport à l'arbre d'entraînement (13) seulement lorsque le disque de réglage qui peut être bloqué (1 par exemple) se trouve à l'état débloqué.

2. Dispositif d'entraînement selon la revendication 1, caractérisé en ce que l'évidement en forme de spirale dans le premier disque de réglage (1) est une rainure (3) et en ce que le deuxième disque de réglage (5) est disposé du côté de la rainure (3) en forme de spirale.

3. Dispositif d'entraînement selon la revendication 2, caractérisé en ce que le disque de réglage pouvant être entraîné par l'arbre d'entraînement (13) est relié solidairement à un moyeu de roue libre (18) monté sur l'arbre d'entraînement.

4. Dispositif d'entraînement selon la revendication 1, 2 ou 3, caractérisé en ce que les deux disques de réglage (1, 5) sont directement adjacents et en ce que l'anneau segmenté (27) est disposé du côté du deuxième disque de réglage (5) qui est opposé au premier disque de réglage (1).

5. Dispositif d'entraînement selon la revendication 3 ou 4, caractérisé en ce que le deuxième disque de réglage (5) est relié solidairement au moyeu de roue libre (18) et que les fentes de passage (6) sont dirigées radialement.

6. Dispositif d'entraînement selon la revendication 5, caractérisé en ce que le deuxième disque de réglage (5) porte le pignon (7) et que la première couronne dentée (4) est montée sur le premier disque de réglage (1).

7. Dispositif d'entraînement selon la revendication 6, caractérisé en ce que l'anneau extérieur (9) est disposé pour se placer, au moins en partie, entre le premier disque de réglage et le deuxième (1, 5).

8. Dispositif d'entraînement selon l'une des revendications 4 à 7, caractérisé en ce que les segments (28) sont maintenus par des pièces de blocage coulissant dans l'évidement ou la rainure (3) du premier disque de réglage (1), ces pièces de blocage pouvant être reliées à un segment (28) par l'intermédiaire d'un boulon traversant une fente de passage (6).

9. Dispositif d'entraînement selon l'une des revendications 1 à 8, caractérisé en ce que les segments (28, 28a) présentent, à leur périphérie extérieure, des renfoncements (29) pour recevoir l'élément d'entraînement sans fin (30).

10. Dispositif d'entraînement selon la revendication 9, caractérisé en ce que les renfoncements (29) possèdent, dans un plan par lequel passe également l'axe central (2) de l'arbre d'entraînement (13), une section transversale comportant des parois latérales dirigées en forme de V et en ce que l'élément d'entraînement sans fin (30) présente une section transversale correspondante.

11. Dispositif d'entraînement selon la revendication 10, caractérisé en ce que l'élément d'entraînement sans fin (30) est une courroie trapézoïdale.

12. Dispositif d'entraînement selon la revendication 10, caractérisé en ce que l'élément d'entraînement sans fin (30) est une chaîne sur les maillons de laquelle des éléments en forme de coin des deux côtés sont solidairement montés pour former une chaîne à section transversale en forme de V.

13. Dispositif d'entraînement selon la revendication 9, caractérisé en ce que les renfoncements possèdent, dans un plan dans lequel passe également l'axe central (2) de l'arbre d'entraînement (13), une section transversale avec parois latérales dirigées en forme de V, en ce que des étriers de serrage (37) sont disposés parallèlement aux parois latérales et maintenus écartés de celles-ci par des éléments d'écartement (38), les extrémités de ces étriers qui se trouvent au fond du renfoncement étant coudées et dirigées, au moins approximativement, parallèlement à l'arbre d'entraînement (13), en ce que des étriers de serrage (37) portent, sur leurs côtés tournés l'un vers l'autre, des éléments de pression (42) en forme de coins, dont les côtés tournés l'un vers l'autre sont dirigés à angle droit par rapport à la direction longitudinale de l'arbre d'entraînement (13) et en ce que l'élément d'entraînement sans fin (30) possède une section transversale rectangulaire correspondante.

14. Dispositif d'entraînement selon la revendication 13, caractérisé en ce que les éléments d'écartement (38) sont des billes métalliques.

15. Dispositif d'entraînement selon la revendication 14, caractérisé en ce que les billes métalliques (38) sont logées dans des rainures (39, 40) dirigées radialement.

16. Dispositif d'entraînement selon la revendication 13, 14 ou 15, caractérisé en ce que l'espace compris entre les étriers de serrage (37) et le segment correspondant (28) est rempli d'un matériau élastique (41).

17. Dispositif d'entraînement selon la revendication 12 ou 13, caractérisé en ce que les éléments en forme de coin ou les éléments de pression (42) sont faits en matériau élastique.

18. Dispositif d'entraînement selon une ou plusieurs des revendications 13 à 17, caractérisé en ce que l'élément d'entraînement sans fin (30) est une chaîne ayant une section transversale de forme rectangulaire.

19. Dispositif d'entraînement selon les revendications 16 et 17, caractérisé en ce que le matériau élastique (41) et les éléments de pression (42) sont reliés sans pouvoir être détachés aux étriers de serrage (37) ou aux segments (28).

20. Dispositif d'entraînement selon la revendication 9, caractérisé en ce qu'un segment (28a) est constitué d'une première partie de segment (44) s'appliquant contre le deuxième disque de réglage (5) et d'une deuxième partie de segment séparée (45) pouvant être déplacée dans le sens axial par rapport à la première partie de segment (44), cette deuxième partie de segment étant déplaçable au moyen d'éléments d'actionnement (46, 47a, 47b) reliant l'une à l'autre les deux parties de segment (44, 45) pour bloquer par coincement l'élément d'entraînement sans fin (30) contre la première partie de segment (44).

21. Dispositif d'entraînement selon la revendication 20, caractérisé en ce qu'on dispose, comme éléments d'actionnement, d'au moins une équerre de serrage (46) et une attache (47a, 47b) et en ce qu'une branche (46a) de l'équerre de serrage (46), qui peut tourner dans la région du sommet, autour d'un axe (48) relié à la première partie de segment (44), représente une partie latérale servant à constituer le renfoncement (29) à la périphérie extérieure du segment (28a).

22. Cycle à deux ou plusieurs roues, comprenant un dispositif d'actionnement pouvant être actionné par l'intermédiaire de pédales, lequel est relié, pour l'entraînement du cycle à une roue dentée disposée sur l'axe d'au moins une roue, par l'intermédiaire d'un entraînement sans fin, caractérisé en ce que le dispositif d'entraînement et l'élément d'entraînement sans fin sont constitués suivant l'une ou plusieurs des revendications 1 à 22.

# FIG.1

FIG.2

EP 0 185 799 B1

# FIG. 3

# FIG. 4

EP 0 185 799 B1

FIG.5

FIG.6

EP 0 185 799 B1

# FIG.7

# FIG.8

# FIG.9

5

FIG.10

FIG.13

# FIG.11

# FIG.12